(19) **Europäisches Patentamt**
**European Patent Office**
**Office européen des brevets**

(11) **EP 4 075 067 A1**

(12) **EUROPÄISCHE PATENTANMELDUNG**

(43) Veröffentlichungstag:
**19.10.2022   Patentblatt 2022/42**

(21) Anmeldenummer: **22167759.4**

(22) Anmeldetag: **12.04.2022**

(51) Internationale Patentklassifikation (IPC):
**F24C 15/20** (2006.01)

(52) Gemeinsame Patentklassifikation (CPC):
**F24C 15/2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **12.04.2021   DE 102021203578**

(71) Anmelder: **BSH Hausgeräte GmbH**
**81739 München (DE)**

(72) Erfinder:
• **Janson, Christian**
  **76703 Kraichtal (DE)**
• **Kling, Julia**
  **76646 Bruchsal (DE)**
• **Romer, Achim**
  **74189 Weinsberg (DE)**
• **Kind, Heike**
  **71706 Markgröningen (DE)**
• **Schrumpf, Stefan**
  **75015 Bretten-Gölshausen (DE)**

(54) **VERFAHREN UND SYSTEM ZUM BESTIMMEN EINES AUSTAUSCHZEITPUNKTES EINES GERUCHSFILTERS UND DUNSTABZUGSVORRICHTUNG**

(57)   Die vorliegende Erfindung betrifft ein Verfahren zur Bestimmung eines Austauschzeitpunktes eines Geruchsfilters (13) einer Dunstabzugsvorrichtung (1). Das Verfahren ist dadurch gekennzeichnet, dass die Bestimmung auf der Basis von Sensorwerten zumindest eines Luftgütesensors durchgeführt wird. Zudem betrifft die Erfindung ein System und eine Dunstabzugsvorrichtung zum Ausführen eines solchen Verfahrens.

Fig. 3

EP 4 075 067 A1

**Beschreibung**

Die vorliegende Erfindung betrifft ein Verfahren und ein System zum Bestimmen eines Austauschzeitpunktes eines Geruchsfilters sowie eine Dunstabzugsvorrichtung zur Durchführung des Verfahrens.

In Dunstabzugsvorrichtungen, insbesondere Dunstabzugshauben werden Geruchsfilter verwendet, um die von der Dunstabzugsvorrichtung angesaugte Luft von Geruchsstoffen zu befreien. Als Geruchsfilter werden beispielsweise Aktivkohlefilter verwendet. Durch die Reinigung der Luft von Geruchsstoffen kann die von der Dunstabzugsvorrichtung ausgegebene Luft wieder in den Raum zurückgeführt werden, in dem die Dunstabzugsvorrichtung betrieben wird. Diese Arten von Dunstabzugsvorrichtung werden auch als Umluftgeräte bezeichnet und der darin vorgesehene Geruchsfilter wird auch als Umluftfilter bezeichnet.

Da der Geruchsfilter sich zusetzen kann und/oder die Eigenschaften des Geruchsfilters abnehmen können, wird dem Benutzer empfohlen den Geruchsfilter in regelmäßigen Abständen auszutauschen. Hierbei wird in der Regel der Austausch des Geruchsfilters in standardisierten Zeit-Intervallen empfohlen; beispielsweise 12 Monate. Zudem ist es bekannt, den Betrieb der Dunstabzugsvorrichtung zu berücksichtigen. Hierzu kann in der Dunstabzugsvorrichtung, beispielsweise in einer Software eine maximale Anzahl von Betriebsstunden der Dunstabzugsvorrichtung hinterlegt sein, beispielsweise 100 Betriebsstunden. Die Austauschintervalle können dabei gegebenenfalls zusätzlich durch die Wahl der Gebläsestufe der Dunstabzugsvorrichtung variiert werden.

Ein Nachteil der bekannten Verfahren besteht darin, dass diese den tatsächlichen Bedingungen, insbesondere benutzerspezifischen Bedingungen, nicht Rechnung trägt. Aufgabe der vorliegenden Erfindung ist es daher eine Lösung zu schaffen, mittels derer die tatsächlichen Bedingungen, insbesondere benutzerspezifische Bedingungen, berücksichtigt werden können.

Der Erfindung liegt die Erkenntnis zugrunde, dass diese Aufgabe gelöst werden kann, indem zumindest die tatsächliche Geruchsbelastung, der der Geruchsfilter ausgesetzt wird, berücksichtigt wird.

Gemäß einem ersten Aspekt betrifft die Erfindung daher ein Verfahren zum Bestimmen eines Austauschzeitpunktes eines Geruchsfilters einer Dunstabzugsvorrichtung. Das Verfahren ist dadurch gekennzeichnet, dass die Bestimmung auf der Basis von Sensorwerten zumindest eines Luftgütesensors erfolgt.

Der Austauschzeitpunkt, der erfindungsgemäß ermittelt wird, kann der aktuelle Zeitpunkt oder ein in der Zukunft liegender Zeitpunkt sein. Bei einem in der Zukunft liegenden Austauschzeitpunkt kann dieser ein Austauschintervall definieren, das zwischen dem aktuellen Zeitpunkt und dem zukünftigen Austauschzeitpunkt liegt.

Erfindungsgemäß wird die Bestimmung des Austauschzeitpunktes auf der Basis von Sensorwerten, die auch als Sensordaten bezeichnet werden können, zumindest eines Luftgütesensors durchgeführt.

Als Luftgütesensor wird insbesondere ein Gassensor zur Überwachung durch Feststellung und Messung von Geruchsbestandteilen in der Luft bezeichnet. Die Geruchsbestandteile können in Form von oxidierbaren oder reduzierbaren Gasen vorliegen. Beispielsweise können Stickoxide, Kohlenmonoxid, Kohlenwasserstoffe und flüchtige organische Substanzen (volatile organic compounds - VOC) erfasst werden. Bei dem erfindungsgemäß verwendeten Luftgütesensor werden vorzugsweise die VOC-Substanzen überwacht.

Indem Sensorwerte, die von einem Luftgütesensor erfasst werden, als Basis der Bestimmung des Austauschzeitpunktes dienen, kann das individuelle Kochverhalten bei der Bestimmung berücksichtigt werden, da je nach Garart, Gargut und Kochdauer die Geruchsbestandteile und deren Menge in dem durch das Kochen erzeugten Wrasen variieren. Dies kann durch einen Luftgütesensor überwacht werden. Durch die Verwendung von erfassten Sensorwerten eines Luftgütesensors kann daher der Austauschzeitpunkt genauer bestimmt werden. Hierdurch kann ein unnötiges Austauschen eines ungesättigten Geruchsfilters, das bei einer reinen Einhaltung eines vorgegebenen festen Austauschintervalls auftreten kann, verhindert werden. Zudem kann der Betrieb der Dunstabzugsvorrichtung mit einem bereits gesättigten Geruchsfilter, der bei einer reinen Einhaltung eines vorgegebenen festen Austauschintervalls auftreten kann, verhindert werden.

Zusätzlich zu den Sensorwerten des Luftgütesensors können auch weitere Einflussgrößen beziehungsweise durch Messungen erfasste Werte dieser Einflussgrößen bei der Bestimmung des Austauschzeitpunktes berücksichtigt werden. Die Sensorwerte des Luftgütesensors und die Werte der weiteren Einflussgrößen werden im Folgenden auch als Messwerte der Einflussgrößen oder auch einfach als Messwerte bezeichnet. Der Zeitpunkt zu dem diese Messwerte aufgenommen werden, werden als Messzeitpunkt bezeichnet. Die Einflussgrößen können auch als Eingangsgrößen bezeichnet werden.

Gemäß einer bevorzugten Ausführungsform wird bei der Bestimmung des Austauschzeitpunktes der Sättigungsgrad und/oder der Geruchsreduzierungsgrad des Geruchsfilters ermittelt. Der Sättigungsgrad, der ermittelt wird, kann hierbei der aktuelle Sättigungsgrad oder ein vorhergesagter Sättigungsgrad sein. Der Sättigungsgrad kann durch einen Geruchsreduzierungsgrad beziehungsweise dessen Veränderung bestimmt werden. Der Sättigungsgrad kann auch als Sättigungszustand, beispielsweise "Geruchsfilter gesättigt", ausgedrückt werden. Hierbei wird der Sättigungszustand ermittelt, in dem der aktuelle Sättigungsgrad mit mindestens einem vorgegebenen Schwellwert des Sättigungsgrades verglichen wird. Ist der aktuelle Sättigungszustand gleich oder nur geringfügig kleiner als der Schwellwert, wird dies zum Beispiel als Sättigungszustand "Geruchsfilter gesättigt" erkannt. Alternativ oder zusätzlich kann der aktuelle Geruchsreduzierungsgrad mit einem Schwellwert verglichen werden. Ist der aktuelle Geruchsreduzierungsgrad geringfügig höher oder gleich als der Schwellwert, wird dies als Sättigungszustand "Geruchsfilter gesättigt" erkannt. Der Geruchsreduzierungsgrad gibt hierbei den Status des Geruchsfilters an, das heißt gibt an, wie effizient Gerüche durch den Geruchsfilter noch ausgefiltert werden können. In der Regel liegt bei einem hohen Sättigungsgrad ein geringer Geruchsreduzierungsgrad vor. Aufgrund des Sättigungsgrades oder des Geruchsreduzierungsgrades kann genau bestimmt werden, wann ein Austausch des Geruchsfilters erforderlich ist.

Gemäß einer Ausführungsform wird der aktuelle Geruchsreduzierungsgrad des Geruchsfilters, der auch Restreduzierungsgrad oder Verbrauchsstatus des Geruchsfilters bezeichnet werden kann, gemessen und von einem Ausgangsreduzierungsgrad des Geruchsfilters subtrahiert. Hierdurch kann der Restreduzierungsgrad des Geruchsfilters zum jeweiligen Messzeitpunkt ermittelt werden. Hierdurch kann zu jedem Messpunkt eine Änderung des Verbrauchsstatus des Geruchsfilters angegeben werden, so dass der Restreduzierungsgrad und damit der Sättigungsverlauf nutzungs- beziehungsweise belastungsspezifisch abgebildet werden kann. Als Ausgangsreduzierungsgrad wird hierbei der Geruchsreduzierungsgrad des Geruchsfilters bezeichnet, den dieser vor der ersten Benutzung des Geruchsfilters in der Dunstabzugsvorrichtung aufweist.

Gemäß einer Ausführungsform werden bei der Bestimmung des Austauschzeitpunktes neben den Sensorwerten des Luftgütesensors, insbesondere den VOC-Werten weitere Einflussgrößen verwendet. Als Werte der weiteren Einflussgrößen können beispielsweise aktuelle Temperatur- und Feuchtigkeitswerte verwendet werden. Diese Werte können einzeln in die Bestimmung einfließen. Alternativ kann aus diesen Werten als eine weitere Einflussgröße eine Raumluftgüte (Indoor Air Quality IAQ) berechnet werden. Die Berücksichtigung von diesen Werten oder des ermittelten IAQ bei der Bestimmung des Austauschzeitpunktes verbessert die Bestimmung, da durch diese Werte beziehungsweise die IAQ der Zustand eines Geruchsfilters, insbesondere die Beladung eines Aktivkohlefilters, unterschiedlich beeinflusst wird und damit dessen Standzeit beeinflusst wird.

Die VOC-Werte, Temperatur- und Feuchtigkeitswerte können durch ein Sensormodul erfasst werden. Dieses kann aus dem Luftgütesensor bestehen oder vorzugsweise zusätzliche Sensoren für Temperatur und Feuchtigkeit umfassen. Beispielsweise nimmt das Sensormodul neben den VOC-Werten über eine Widerstandsmessung auch aktuelle Temperatur- und Feuchtigkeitswerte in der Sensornähe auf. Der Aufbau der Dunstabzugsvorrichtung, mit der das erfindungsgemäße Verfahren durchgeführt wird, ist daher einfach.

Gemäß einer Ausführungsform wird bei der Bestimmung des Austauschzeitpunktes zusätzlich als weitere Einflussgröße die Kochdauer und/oder die Lüftergeschwindigkeit verwendet. Auch diese Bedingungen beeinflussen den Zustand eines Geruchsfilters, insbesondere die Beladung eines Aktivkohlefilters, und damit dessen Standzeit. Indem diese Umstände bei der Bestimmung des Austauschzeitpunktes verwendet werden, wird die Genauigkeit weiter verbessert.

Gemäß einer Ausführungsform werden die erfassten Werte der Einflussgrößen mit zumindest einem gespeicherten Schwellwert verglichen und daraus die Sättigung des Geruchsfilters ermittelt. Insbesondere kann der gespeicherte Schwellwert ein Wert sein, bei dem ein spezifischer Geruchsreduzierungsgrad nicht mehr erreicht wird. Die erfassten Werte, die für diesen Vergleich verwendet werden, können aktuell erfasste Werte oder zuvor erfasste und gespeicherte Werte darstellen. Insbesondere können die erfassten Werte eine Summe aus zuvor erfassten Werten darstellen. Der Vergleich kann mit einzelnen der erfassten Sensorwerte erfolgen. Insbesondere kann beispielsweise der an dem Auslass eines Geruchsfilters erfasster VOC-Wert mit einem Schwellwert verglichen werden. Steigt der VOC-Wert bis zu einem Schwellwert, weist dies auf eine Sättigung des Geruchsfilters hin. Vorzugsweise wird der Vergleich aber mit Werten durchgeführt, die aus den Sensorwerten und gegebenenfalls weiteren Informationen ermittelt werden, insbesondere einem Geruchsreduzierungsgrad.

Gemäß einer weiteren Ausführungsform wird bei der Bestimmung des Sättigungsgrades und/oder des Geruchsreduzierungsgrades mindestens ein Gewichtungsfaktor berücksichtigt. Insbesondere kann der Gewichtungsfaktor angeben, wie stark eine oder mehrere Eingangsgrößen, wie beispielsweise VOC-Werte und/oder aktuelle Temperatur- und Feuchtigkeitswerte bei der Bestimmung des Geruchsreduzierungsgrades berücksichtigt werden.

Gemäß einer Ausführungsform wird bei der Bestimmung des Geruchsreduzierungsgrades, insbesondere des Restreduzierungsgrades, eine Charakterisierung des Filters vorgenommen. Die Charakterisierung des Filters kann auch als filterspezifische Charakterisierung bezeichnet werden. Insbesondere können Filter hinsichtlich des Herstellungsprozesses, verwendeten Filtermediums und/oder verwendeten Trägermaterials charakterisiert beziehungsweise eingeteilt werden. Beispielsweise bezieht sich die Charakterisierung auf das Absorbtionsverhalten des Filtermediums, Durchströmungsverhalten des Filters und/oder auf eine Resistenz gegen Luftfeuchtigkeit des Filters.

Die Charakterisierung wird vorzugsweise als erster Schritt oder vor der Durchführung des erfindungsgemäßen Verfahrens anhand von Messungen mit unterschiedlichen Geruchsfiltern durchgeführt.

Die Gewichtungsfaktoren können vorzugsweise durch die Charakterisierung vorgegeben werden. Die Charakterisierung kann dabei über die Betrachtung verschiedener Einflussgrößen bei unterschiedlichen Ausprägungen des Geruchsfilters erfolgen, aus denen dann die Gewichtungsfaktoren hervorgehen. Die Gewichtungsfaktoren werden abhängig des Einflusses auf die Sättigungseigenschaft beziehungsweise die Geruchsreduzierung der jeweiligen Einflussgröße, mit den Messwerten der Einflussgröße in Bezug gesetzt und verrechnet. Beispielsweise kann bei einem Filter, der eine geringe Resistenz gegen Feuchtigkeit aufweist, der Messwert der Luftfeuchtigkeit mit einem angepassten Gewichtungsfaktor versehen werden. Durch die filterspezifische Gewichtung der Einflussgrößen wird die Bestimmung des Geruchreduzierungsgrades und damit des Austauschzeitpunktes weiter präzisiert.

Gemäß einer Ausführungsform erfolgt somit die Ermittlung der Änderung der Geruchsreduzierung durch die filterspezifische Charakterisierung und Verrechnung der daraus resultierenden Eigenschaften in Form von Gewichtungsfaktoren für die Einflussgrößen und festgelegten Basiswerten, insbesondere Schwellwerten oder Ausgangswerten, mit den aufgenommenen Messwerten.

Gemäß einer Ausführungsform werden erfasste Messwerte aufgezeichnet und aus diesen Messwerten oder aus Werten, die aus diesen ermittelt werden, wird ein Modell zur Bestimmung des Sättigungsverhaltens erzeugt. Als erfasste Messwerte werden hierbei insbesondere Sensorwerte des oder der Sensoren bezeichnet. Zudem können aber auch Werte, wie beispielsweise die Kochdauer, die gemessen wird, oder die Lüftergeschwindigkeit, die beispielsweise von der Steuerung der Dunstabzugsvorrichtung angegeben wird, als erfasste Messwerte bezeichnet werden, die zur Erzeugung des Modells verwendet werden. Auf diese Weise können benutzerspezifische Bedingungen bei der zukünftigen Bestimmung des Sättigungsverhaltens und damit bei der Bestimmung des Austauschzeitpunktes berücksichtigt werden und die Genauigkeit der Bestimmung des Austauschzeitpunktes daher weiter verbessert werden.

Vorzugsweise werden die über mehrere Messreihen, unter realen Kochbedingungen, aufgezeichneten Daten genutzt, um mit Hilfe maschinellen Lernens (z.B. eines neuronalen Netzes) ein Modell zur Bestimmung des Sättigungsverhaltens zu erzeugen. Die Auswertung durch das Verfahren ermöglicht es den Zusammenhang zwischen den Eingangsgrößen und der Alterung des Umluftfilters, das heißt der Sättigung des Umluftfilters, besser einzubeziehen und daraus den geeigneten Austauschzeitpunkt zu bestimmen.

Gemäß einer Ausführungsform wird eine Sättigungsvorhersage des Geruchsfilters ermittelt. Als Sättigungsvorhersage wird der zu erwartende Sättigungszustand des Geruchsfilters zu einem bestimmten Zeitpunkt bezeichnet. Hierbei kann die Steigerung des Sättigungsgrades berücksichtigt werden. Indem eine Sättigungsvorhersage, insbesondere der Verlauf der Sättigungszunahme, ermittelt wird, kann je nach Benutzer ein nutzerspezifischer Austauschzeitpunkt ermittelt werden.

Gemäß einer bevorzugten Ausführungsform umfasst das Verfahren das Erzeugen einer Austauschempfehlung. Als Austauschempfehlung wird die Ausgabe eines Austauschzeitpunktes an den Benutzer bezeichnet. Die Austauschempfehlung kann an der Dunstabzugsvorrichtung angezeigt oder akustisch ausgegeben werden. Die Austauschempfehlung kann ein aktuelles Austauschen betreffen. Alternativ kann die Austauschempfehlung die Angabe einer Zeitdauer bis zum Austauschen darstellen. Somit kann der Benutzer beispielsweise durch ein Signal zum sofortigen Austausch des Geruchsfilters aufgefordert werden oder über den Zeitraum innerhalb dessen der Geruchsfilter ausgetauscht werden sollte, informiert werden. Da diese Angaben erfindungsgemäß nutzerspezifisch sind, kann ein unnötiges Austauschen eines noch nicht gesättigten Geruchsfilters oder der Betrieb der Dunstabzugsvorrichtung mit einem bereits gesättigten Geruchsfilter verhindert werden.

Gemäß einer Ausführungsform wird ein Filterzustand in Form eines ermittelten Restreduzierungsgrades ausgegeben. Hierbei kann die Ausgabe beginnend von einem definierten Ausgangszustand, insbesondere Ausgangsreduzierungsgrades, von beispielsweise 95% rückläufig bis auf einen Schwellenwert, insbesondere definierten Geruchsreduzierungsgrades, von beispielsweise 50% erfolgen. Gemäß einer weiteren Ausführungsform kann der Ausgabewert aber auch aufsteigend von 0 bis 100% zwischen dem Ausgangszustand und dem Schwellenwert skaliert werde. Hierbei entspricht der Ausgangszustand von beispielsweise 95% beispielsweise 0% und der Schwellwert von beispielsweise 50% 100%.

Gemäß einem weiteren Aspekt betrifft die vorliegende Erfindung ein System zum Bestimmen eines Austauschintervalls. Das System ist dadurch gekennzeichnet ist, dass das System zur Ausführen des erfindungsgemäßen Verfahrens ausgelegt ist.

Vorteile und Merkmale, die bezüglich des erfindungsgemäßen Verfahrens beschrieben wurden und bezüglich der erfindungsgemäßen Dunstabzugsvorrichtung beschrieben werden, gelten - soweit anwendbar - auch für das erfindungsgemäße System und jeweils umgekehrt und werden gegebenenfalls nur einmalig beschrieben.

Das System umfasst vorzugsweise einen Luftgütesensor und eine Verarbeitungseinheit. Die Verarbeitungseinheit dient insbesondere zur Auswertung zumindest von erfassten Sensorsignalen. Zudem kann die Verarbeitungseinheit zum Verarbeiten der von dem Luftgütesensor und gegebenenfalls weitere Sensoren erhaltenen Sensordaten oder weiteren Daten, beispielsweise Gewichtungsfaktoren, oder Messwerten dienen. Die Verarbeitungseinheit kann in der Dunstabzugsvorrichtung integriert sein oder mit dieser verbunden, insbesondere drahtlos verbunden sein. Die Verarbeitungseinheit kann zumindest teilweise als Software ausgeführt sein. Hierdurch ist es möglich Seriengeräte, die mit einem Luftgütesensor ausgestattet sind, bei der Herstellung, das heißt ab Werk, mit einer entsprechenden Software zu versehen.

Vorzugsweise umfasst das System zumindest eine Ausgabeeinheit zur Ausgabe einer Austauschempfehlung. Die Ausgabeeinheit kann in der Dunstabzugsvorrichtung integriert sein, beispielsweise in einer Anzeige der Dunstabzugsvorrichtung. Alternativ kann die Ausgabeeinheit aber beispielsweise auch ein mobiles Endgerät darstellen. In diesem Fall ist vorzugsweise auf dem mobilen Endgerät eine Software oder App vorhanden, die die Ausgabe der Austauschempfehlung anzuzeigen oder akustisch auszugeben. In diesem Fall kann über die App auch eine Möglichkeit für den Benutzer geschaffen werden, bei Erhalt einer Austauschempfehlung einen neuen Geruchsfilter zu bestellen.

Gemäß einer Ausführungsform kann die Ausgabeeinheit auch zur Ausgabe und insbesondere Anzeige des Filterzustandes dienen. Hierbei kann der Filterzustand beispielsweise als prozentuale Angabe des Verbrauchsstatus ausgegeben oder angezeigt werden.

Gemäß einer Ausführungsform weist das System mindestens ein Sensormodul auf, das zumindest einen Luftgütesensor umfasst. In dem Sensormodul können weitere Sensoren, wie beispielsweise ein Temperatursensor oder Feuchtigkeitssensor, vorgesehen sein.

Der Luftgütesensor oder gegebenenfalls das Sensormodul kann in der Dunstabzugsvorrichtung angeordnet sein. Insbesondere kann der Luftgütesensor vor oder hinter dem Geruchsfilter angeordnet sein. In einer Ausführungsform kann sowohl vor dem Geruchsfilter als auch nach dem Geruchsfilter ein Luftgütesensor vorgesehen sein. Die Anordnung des Luftgütesensors vor und/oder nach dem Geruchsfilter weist den Vorteil auf, dass in diesen Bereichen eine gute Durchmischung der durch die Dunstabzugsvorrichtung angesaugte Luft vorliegt und dadurch ein stabiles Sensorsignal und damit eine zuverlässige Messung gewährleistet werden kann.

Gemäß einem weiteren Aspekt betrifft die Erfindung eine Dunstabzugsvorrichtung zur Durchführung des erfindungsgemäßen Verfahrens. Die Dunstabzugsvorrichtung ist dadurch gekennzeichnet, dass diese mindestens einen Luftgütesensor aufweist, der in der Dunstabzugsvorrichtung angeordnet ist.

Vorteile und Merkmale, die bezüglich des erfindungsgemäßen Verfahrens und Systems beschrieben wurden, gelten - soweit anwendbar - auch für die erfindungsgemäße Dunstabzugsvorrichtung und jeweils umgekehrt und werden gegebenenfalls nur einmalig beschrieben.

Gemäß einer Ausführungsform ist der Luftgütesensor in der Dunstabzugsvorrichtung in dem Strömungskanal, in dem der Geruchsfilter angeordnet ist, vorgesehen. Insbesondere ist der Luftgütesensor in dem Strömungskanal vor oder hinter dem Geruchsfilter angeordnet. Alternativ kann sowohl vor als auch nach dem Geruchsfilter jeweils mindestens ein Luftgütesensor vorgesehen sein. Als Strömungskanal wird der Luftströmungskanal bezeichnet, der sich zwischen der Lufteinlassöffnung und der Luftauslassöffnung der Dunstabzugsvorrichtung erstreckt, über die die Luft in den Raum abgegeben wird, in dem die Dunstabzugsvorrichtung betrieben wird. Zusätzlich zu dem oder den Luftgütesensoren können auch weitere Sensoren, wie beispielsweise Temperatursensoren, in dem Strömungskanal vor oder hinter dem Geruchsfilter vorgesehen sein.

Die Erfindung wird im Folgenden erneut unter Bezugnahme auf die beiliegenden Figuren erläutert. Es zeigen:

Figur 1: eine Ausführungsform einer Dunstabzugsvorrichtung zur Verwendung in einem Verfahren gemäß der vorliegenden Erfindung;

Figuren 2a und 2b: schematische Darstellungen der Filterung von Geruchsstoffen an einem neuen Geruchsfilter und einem gesättigten Geruchsfilter;

Figur 3: eine schematische Darstellung der Einflussgrößen der Ermittlung eines Sättigungszustandes eines Geruchsfilters;

Figur 4: eine schematische Darstellung einer Auswertung von Messwerten gemäß einer Ausführungsform des erfindungsgemäßen Verfahrens; und

Figur 5: eine weitere schematische Darstellung der Auswertung von Messwerten gemäß einer Ausführungsform des erfindungsgemäßen Verfahrens.

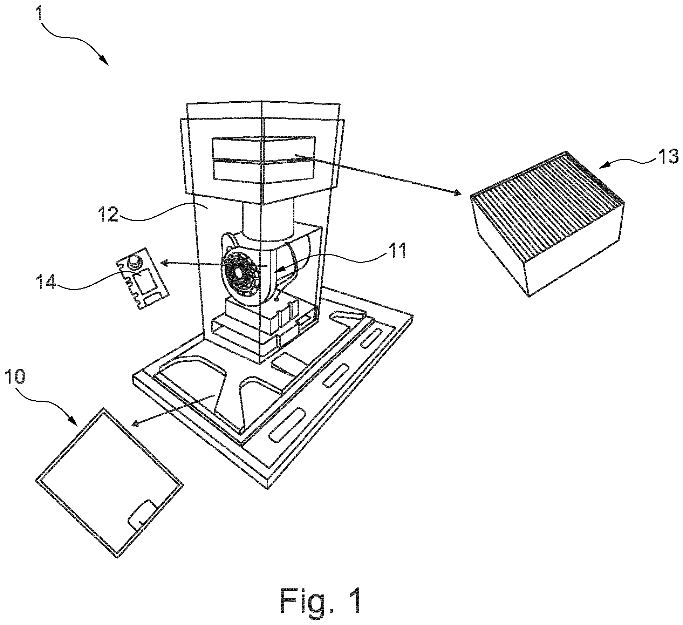

In Figur 1 ist eine Dunstabzugsvorrichtung 1 in Form einer Dunstabzugshaube gezeigt. Die Dunstabzugsvorrichtung 1 weist in einer Ansaugöffnung (nicht sichtbar) einen Fettfilter 10 auf. Der Fettfilter 10 ist in Figur 1 in dem entnommenen Zustand gezeigt. In einem Kamin 12 der Dunstabzugsvorrichtung 1 ist ein Gebläse 11 in Strömungsrichtung nach dem Fettfilter 10 angeordnet. Zudem ist in dem Kamin 12 ein Geruchsfilter 13 in Form eines Aktivkohlefilters angeordnet. Der Geruchsfilter 13 ist in Figur 1 zusätzlich separat gezeigt. Der Geruchsfilter 13 ist in Strömungsrichtung nach dem Gebläse 11 angeordnet. In der gezeigten Ausführungsform ist zwischen dem Gebläse 11 und dem Geruchsfilter 13 ein Sensormodul 14 vorgesehen. Das Sensormodul 14 ist in Figur 1 separat gezeigt. Das Sensormodul 14 ist in der Ausführungsform nach Figur 1 in Strömungsrichtung vor dem Geruchsfilter 13 angeordnet. Der Bereich zwischen der Ansaugöffnung, die auch als Lufteinlassöffnung bezeichnet werden kann, und der Oberseite des Kamins 12 kann auch als Strömungskanal bezeichnet werden. Das Sensormodul 14 liegt somit in dem Strömungskanal vor dem Geruchsfilter 13.

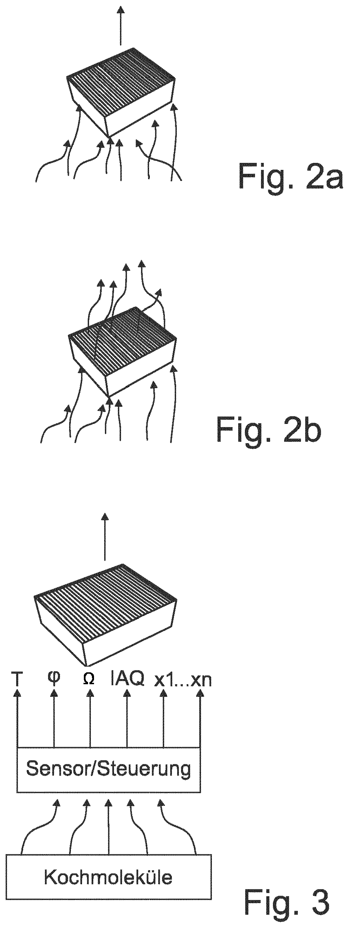

In den Figuren 2a und 2b sind schematische Darstellungen der Filterung von Geruchsstoffen an einem neuen Geruchsfilter 13 und einem gesättigten Geruchsfilter 13 gezeigt. Bei einem neuen Geruchsfilter 13, der in Figur 2a gezeigt ist, beträgt der Geruchsreduzierungsgrad Of, der durch den Geruchsfilter 13 erzielt werden kann, beispielsweise 95%. Der Geruchsreduzierungsgrad wird insbesondere nach DIN 61591 bestimmt. Bei einem Geruchsfilter, der genutzt wurde und der in Figur 2b gezeigt ist, ist der Geruchsreduzierungsgrad verringert. Dieser kann beispielsweise nur noch 60% betragen. In diesem Zustand wird der Geruchsfilter als zumindest teilweise gesättigt bezeichnet. In dem Zustand, in dem der Geruchsreduzierungsgrad unterhalb einem Schwellwert liegt, wird der Geruchsfilter als gesättigt bezeichnet.

In Figur 3 ist eine schematische Darstellung der Einflussgrößen der Ermittlung eines Sättigungszustandes beziehungsweise Geruchreduzierungsgrades eines Geruchsfilters, die bei einer Ausführungsform des erfindungsgemäßen Verfahrens verwendet werden können, gezeigt.

Insbesondere können die folgenden Einflussgrößen verwendet werden:

| T | Temperatur |
| φ | Feuchtigkeit |
| Ω | Widerstandswert |
| IAQ | Raumluftqualität, |
| x | weitere Einflussgrößen |

Aus diesen Eingangsgrößen kann die Information, dass der Geruchsfilter gesättigt ist oder ein Sättigungszustand oder Sättigungsgrad ermittelt werden. Die Korrelation zwischen den Eingangsgrößen und der Filtersättigung kann vorzugsweise durch neuronale Netze erfolgen. Hierdurch können die Information "Filter gesättigt" und/oder der Sättigungsgrad bestimmt werden.

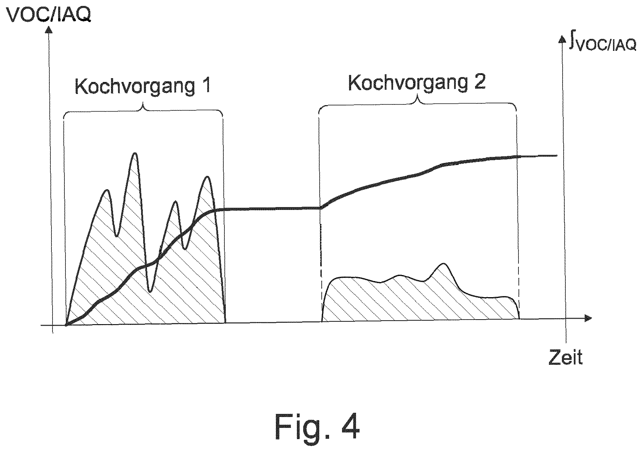

In Figur 4 ist eine schematische Darstellung einer Auswertung von Messwerten gemäß einer Ausführungsform des erfindungsgemäßen Verfahrens gezeigt. Insbesondere sind in Figur 4 die VOC/IAQ-Werte und deren Integration über die Zeit gezeigt. In Figur 4 sind dabei die Verläufe der VOC/IAQ- Werte über zwei Kochvorgänge gezeigt.

Bei dieser Ausführungsform erfolgt die Berechnung der Aktivkohlefiltersättigung dadurch, dass die Geruchsbelastung während eines Kochvorgangs mittels der mit einem Luftgütesensor gemessenen VOC-Werte bzw. der durchaus ermittelten IAQ-Werte berechnet wird.

Durch Integration/Summierung der VOC- bzw. IAQ-Werte über die Zeit, wird ein Summenwert über mindestens ein oder mehrere Kochvorgänge gebildet. Dieser Summenwert wird in Relation zu einer im Vorfeld ermittelten Obergrenze, die auch als Schwellwert bezeichnet werden kann, gesetzt. Diese Obergrenze kann beispielsweise durch Laborversuche ermittelt werden. Diese Obergrenze entspricht der Summe der VOC- bzw. IAQ-Werte, die sich über die Zeit ergibt, wenn der Aktivkohlefilter seinen spezifischen Geruchsreduzierungsgrad gerade nicht mehr erreicht, das heißt der Aktivkohlefilter als gesättigt gilt.

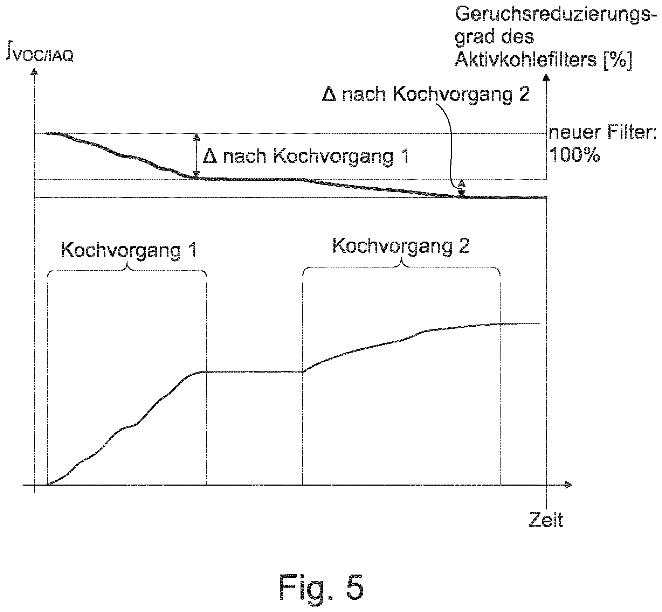

In Figur 5 sind die integrierten VOC/IAQ-Werte gegenüber dem Geruchsreduzierungsgrad (R) aufgetragen. R wird hierbei durch folgende Formel berechnet:

$$R = 1 - a \cdot \int_0^t b \cdot VOCs\, dt$$

Die Sättigung des Geruchsfilters, insbesondere Aktivkohlefilter wird durch folgende Formel berechnet:

$$S = \frac{R - R_0}{1 - R_0}$$

R: Reduzierungsgrad [0..1]
$R_0$: definierter unterer Grenzwert für Reduzierungsgrad [0..1] (z.B. 0,6 für 60%)
S: Aktivkohlefiltersättigung [0..1]
a, b: Skalierungsfaktoren

Wichtig ist dabei, dass die Skalierungsfaktoren a und b in Zusammenhang mit der Bestimmung von $R_0$ so gewählt werden, dass R innerhalb der Zeit, für die $R_0$ frühestens beziehungsweise spätestens erreicht werden soll, das heißt das minimale und maximale Wechselintervall, nie kleiner als $R_0$ wird. $R_0$ kann im Vorfeld über Laborversuche ermittelt werden. Daraus können die Skalierungsfaktoren a und b abgeleitet werden, um einen adäquaten zeitlichen Verlauf von R zu erhalten.

Mit der vorliegenden Erfindung wird somit eine nutzungsspezifische Lösung in Bezug auf individuelles Kochverhalten geschaffen. Die Auswertung durch das erfindungsgemäße Verfahren ermöglicht es den Zusammenhang zwischen den Einflussgrößen, die auch als Eingangsgrößen bezeichnet werden, und der Alterung des Umluftfilters, das heißt der Sättigung des Geruchsfilters, besser einzubeziehen. Dieser Zusammenhang kann vorzugsweise durch eine Gewichtung der Einflussgrößen, die beispielsweise durch eine vorherige Charakterisierung festgelegt sein kann, ausgedrückt werden und bei der Bestimmung der Sättigung berücksichtigt werden.

Durch die Erfindung kann dem Umstand Rechnung getragen werden, dass sich bei einem Kochvorgang die Raumluftbedingungen in der Umgebung ändern. Abhängig von verschiedenen Einflussgrößen wie beispielsweise Geruchsbelastung, Feuchtigkeit, Temperatur, Kochdauer und Lüftergeschwindigkeit wird die Beladung des Aktivkohlefilters unterschiedlich beeinflusst.

Die vorliegende Erfindung sieht beispielsweise vor, dass Sensordaten eines Luftgütesensors (z.B. Sensor BME 680) weit über die bis jetzt vorhandene Stufensteuerung der Dunstabzugshaube im Automatikmodus genutzt und ein Geruchsfilteraustauschintervall beziehungsweise Serviceintervall für den Benutzer individuell bestimmt werden kann.

Mit der vorliegenden Erfindung wird damit eine Verbesserung der Bestimmung des Sättigungsstatus und einer resultierenden Austauschempfehlung ermöglicht.

Insbesondere kann durch die Erfindung der Nachteil, dass bei bekannten Verfahren die Bestimmung der Sättigung unabhängig von der Geruchsbelastung, welcher der Filter ausgesetzt wird, erfolgt behoben werden. Somit können mit der Erfindung zureichend genaue Aussagen des Filtersättigungsstatus ermittelt werden und dadurch der Austauschzeitpunkt genauer bestimmt werden.

Durch tatsächliche Auswertung der Messergebnisse des Sensors oder der Sensoren und gegebenenfalls weiterer Informationen wird das reale Kochverhalten als Basis für das Filterwechselintervall herangezogen anstatt eine pauschale Filternutzungszeit vorzugeben. Wird zudem auch die Ausgestaltung des verwendeten Geruchsfilters, insbesondere durch eine filterspezifische Charakterisierung und daraus abgeleitete Gewichtungen berücksichtigt, wird die Bestimmung des Geruchsreduzierungsgrades und damit die Bestimmung des Austauschzeitpunktes weiter verbessert. In Verbindung mit einer entsprechenden Anzeige am Gerät oder über eine App auf einem mobilen Endgerät, beispielsweise "Home Connect" wird der Benutzer auf einen anstehenden Filterwechsel hingewiesen und die Wahrscheinlichkeit erhöht, dass dieser bei Fälligkeit auch durchgeführt wird.

Bezugszeichenliste

1     Dunstabzugsvorrichtung
10    Fettfilter
11    Gebläse
12    Kamin
13    Geruchsfilter
14    Sensormodul

**Patentansprüche**

1. Verfahren zur Bestimmung eines Austauschzeitpunktes eines Geruchsfilters (13) einer Dunstabzugsvorrichtung (1), **dadurch gekennzeichnet, dass** die Bestimmung auf der Basis von Sensorwerten zumindest eines Luftgütesensors durchgeführt wird.

2. Verfahren nach Anspruch 1, wobei bei der Bestimmung des Austauschzeitpunktes der Sättigungsgrad und/oder der Geruchsreduzierungsgrad des Geruchsfilters (13) ermittelt wird.

3. Verfahren nach einem der Ansprüche 1 oder 2, wobei bei der Bestimmung des Austauschzeitpunktes neben VOC-Werten, aktuelle Temperatur- und Feuchtigkeitswerte verwendet werden.

4. Verfahren nach Anspruch 3, wobei die VOC-Werte sowie Temperatur- und Feuchtigkeitswerte durch ein Sensormodul (14) erfasst werden.

5. Verfahren nach einem der Ansprüche 1 bis 4, wobei bei der Bestimmung des Austauschzeitpunktes zusätzlich die Kochdauer und/oder Lüftergeschwindigkeit verwendet wird.

6. Verfahren nach einem der Ansprüche 1 bis 5, wobei die erfassten Werte mit zumindest einem gespeicherten Schwellwert verglichen werden und aus dem Vergleichsergebnis die Sättigung des Geruchsfilters (13) ermittelt wird.

7. Verfahren nach einem der Ansprüche 2 bis 6, wobei bei der Bestimmung des Sättigungsgrades und/oder des Geruchsreduzierungsgrades mindestens ein Gewichtungsfaktor für mindestens eine Einflussgröße berücksichtigt.

8. Verfahren nach Anspruch 7, wobei der mindestens eine Gewichtungsfaktor durch eine vorherige Charakterisierung des Geruchsfilters festgelegt wird.

9. Verfahren nach einem der Ansprüche 1 bis 8, wobei erfasste Messwerte aufgezeichnet werden und aus diesen Messwerten ein Modell zur Bestimmung des Sättigungsverhaltens des Geruchsfilters (13) erzeugt wird.

10. Verfahren nach einem der Ansprüche 1 bis 9, wobei eine Sättigungsvorhersage des Geruchsfilters (13) ermittelt wird.

11. Verfahren nach einem der Ansprüche 1 bis 10, wobei das Verfahren das Erzeugen einer Austauschempfehlung umfasst.

12. System zum Bestimmen eines Austauschintervalls eines Geruchsfilters (13) einer Dunstabzugsvorrichtung (1), **dadurch gekennzeichnet, dass** das System zur Ausführen des Verfahrens nach einem der Ansprüche 1 bis 11 ausgelegt ist.

13. System nach Anspruch 12, wobei das System mindestens ein Sensormodul (14) aufweist, das zumindest einen Luftgütesensor umfasst.

14. System nach Anspruch 13, wobei das Sensormodul (14) in der Dunstabzugsvorrichtung (1) vor oder hinter dem Geruchsfilter (13) angeordnet ist.

15. System nach einem der Ansprüche 12 bis 14, wobei das System zumindest eine Verarbeitungseinheit zur Auswertung zumindest von erfassten Sensorsignalen und/oder zumindest eine Ausgabeeinheit zur Ausgabe einer Austauschempfehlung aufweist.

16. Dunstabzugsvorrichtung zum Durchführen des Verfahrens nach einem der Ansprüche 1 bis 11, **dadurch gekennzeichnet, dass** die Dunstabzugsvorrichtung (1) einen Geruchsfilter (13) und mindestens einen Luftgütesensor aufweist, der in der Dunstabzugsvorrichtung (1) angeordnet ist.

17. Dunstabzugsvorrichtung nach Anspruch 16, wobei der mindestens eine Luftgütesensor in dem Strömungskanal der Dunstabzugsvorrichtung vorgesehen ist, in dem der Geruchsfilter angeordnet ist.

1

13

12

11

14

10

Fig. 1

Fig. 2a

Fig. 2b

Fig. 3

VOC/IAQ

∫VOC/IAQ

Kochvorgang 1                    Kochvorgang 2

Zeit

Fig. 4

Fig. 5

**Europäisches Patentamt**
**European Patent Office**
**Office européen des brevets**

# EUROPÄISCHER RECHERCHENBERICHT

**Nummer der Anmeldung**

**EP 22 16 7759**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2013 213546 A1 (E G O ELEKTRO GERÄTEBAU GMBH [DE]) 15. Januar 2015 (2015-01-15) * Absatz [0010]; Ansprüche 1,2,10,; Abbildung 1 * ----- | 1-17 | INV. F24C15/20 |
| X | DE 10 2016 120213 A1 (MIELE & CIE [DE]) 26. April 2018 (2018-04-26) * Absätze [0016], [0045] – [0047], [0051]; Ansprüche 1-5 * ----- | 1-17 | |
| X | DE 10 2015 218007 A1 (BSH HAUSGERAETE GMBH [DE]) 23. März 2017 (2017-03-23) * das ganze Dokument * ----- | 1-17 | |
| | | | **RECHERCHIERTE SACHGEBIETE (IPC)** |
| | | | F24C |

Der vorliegende Recherchenbericht wurde für alle Patentansprüche erstellt

| Recherchenort | Abschlußdatum der Recherche | Prüfer |
|---|---|---|
| Den Haag | 18. August 2022 | Meyers, Jerry |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 16 7759

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-08-2022

| Im Recherchenbericht angeführtes Patentdokument | Datum der Veröffentlichung | Mitglied(er) der Patentfamilie | Datum der Veröffentlichung |
|---|---|---|---|
| DE 102013213546 A1 | 15-01-2015 | DE 102013213546 A1<br>EP 2824395 A2 | 15-01-2015<br>14-01-2015 |
| DE 102016120213 A1 | 26-04-2018 | KEINE | |
| DE 102015218007 A1 | 23-03-2017 | KEINE | |

Für nähere Einzelheiten zu diesem Anhang : siehe Amtsblatt des Europäischen Patentamts, Nr.12/82

EPO FORM P0461